# EUROPÄISCHE PATENTANMELDUNG

(11) **EP 2 757 075 A1**
(43) Veröffentlichungstag der Anmeldung: **23.07.2014**
(21) Anmeldenummer: 13151705.4
(22) Anmeldetag: 17.01.2013
(51) Int. Cl.: C02F 3/20, B01F 3/04

(54) **Klärbeckenbelüftung**

(71) Anmelder: Bassfeld, Joachim, 46535 Dinslaken (DE)
(72) Erfinder: Bassfeld, Joachim, 46535 Dinslaken (DE)
(74) Vertreter: Rohmann, Michael

(57) **Zusammenfassung**

Klärbeckenbelüfter mit einer Trägerstruktur und mit einer eine Vielzahl von Luftaustrittsöffnungen aufweisenden Membran. Die Membran ist mit einem Fixierungsmittel fluiddicht an die Trägerstruktur angeschlossen. Die Trägerstruktur weist auf ihrer membranseitigen Oberfläche eine Profilierung auf, welche Profilierung zumindest eine zwischen Erhebungen angeordnete Vertiefung aufweist, wobei die Membran mit zumindest einem Befestigungsmittel, welches Befestigungsmittel in der Vertiefung angeordnet ist, an der Trägerstruktur bzw. in der Vertiefung gesichert ist. Die Membran liegt im Ruhezustand des Klärbeckenbelüfters auf der Profilierung auf. Ein Anlageabschnitt der Membran ist in einem Betriebszustand des Klärbeckenbelüfters mit dem Befestigungsmittel in der Vertiefung erhalten, wobei die Membran abgesehen von dem Anlageabschnitt im Betriebszustand von der Profilierung abgehoben ist.

## Beschreibung

Die Erfindung betrifft einen Klärbeckenbelüfter mit einer Trägerstruktur und mit einer eine Vielzahl von Luftaustrittsöffnungen aufweisenden Membran.

Klärbeckenbelüfter der vorstehend genannten Art sind aus der Praxis grundsätzlich bekannt. Diese Klärbeckenbelüfter sind beispielsweise als Plattenbelüfter, Rohrbelüfter oder Scheibenbelüfter ausgebildet, wobei eine starre Belüfterstruktur eine Kunststoffmembran trägt. Die Kunststoffmembran weist feine Öffnungen auf, durch die Luft aus dem Belüfterkörper in die zu behandelnde Flüssigkeit strömt. Nachteilig bei den aus der Praxis bekannten Belüftern ist, dass deren Größe bzw. flächige Ausdehnung nur in einem geringen Rahmen variierbar ist. Zur Versorgung eines Klärbeckens mit Luft ist daher eine aufwendige Verbindung einer Mehrzahl von Belüftern erforderlich, weswegen die aus der Praxis bekannten Belüftungssysteme einen komplexen Aufbau aufweisen. Weiterhin ist mit den aus der Praxis bekannten Belüftern die Versorgung von besonders tiefen Klärbecken mit Luft bzw. Sauerstoff kritisch.

Der Erfindung liegt daher das technische Problem zugrunde, einen Klärbeckenbelüfter anzugeben, der flexibel einsetzbar ist, der sich durch eine großflächige Luft- bzw. Sauerstoffabgabefläche auszeichnet und der einfach herstellbar und montierbar ist.

Zur Lösung des technischen Problems lehrt die Erfindung einen Klärbeckenbelüfter mit einer Trägerstruktur und mit einer eine Vielzahl von Luftaustrittsöffnungen aufweisenden Membran, wobei die Membran mit einem Fixierungsmittel fluiddicht an die Trägerstruktur angeschlossen ist, wobei die Trägerstruktur auf ihrer membranseitigen Oberfläche eine Profilierung aufweist, welche Profilierung zumindest eine zwischen zwei Erhebungen angeordnete Vertiefungen aufweist, wobei die Membran mit zumindest einem Befestigungsmittel, welches Befestigungsmittel in der Vertiefung angeordnet ist, an der Trägerstruktur bzw. in der Vertiefung gesichert ist, wobei die Membran im Ruhezustand des Klärbeckenbelüfters auf der Profilierung aufliegt, wobei ein Anlageabschnitt der Membran in einem Betriebszustand des Klärbeckenbelüfters mit dem Befestigungsmittel in der Vertiefung gehalten ist und wobei die Membran abgesehen von dem Anlageabschnitt im Betriebszustand von der Profilierung abgehoben ist. In dem Betriebszustand wird vorzugsweise Luft und/oder Sauerstoff mit der Maßgabe zwischen die Profilierung und die Membran gepresst, dass die Membran vorzugsweise von der Profilierung abgehoben und bevorzugt die Luft und/oder der Sauerstoff durch die Luftaustrittsöffnungen der Membran in die zu reinigende Flüssigkeit, insbesondere Wasser, strömt. Vorzugsweise weist die Profilierung eine Vielzahl an Erhebungen und eine Vielzahl an Vertiefungen auf. In dem Ruhezustand wird die Membran auf ihrer der Profilierung zugewandten Oberfläche nicht mit einem Druck beaufschlagt, so dass die Membran vorzugsweise fluiddicht auf der Profilierung des Klärbeckenbelüfters aufliegt. Zweckmäßigerweise sind die Luftaustrittsöffnungen der Membran im Ruhezustand verschlossen. Empfohlenermaßen wird die Membran durch einen Druck des in dem Klärbecken befindlichen zu klärenden fluiden Mediums, insbesondere Wasser, gegen die Profilierung gedrückt.

Die Trägerstruktur ist beispielsweise eine Trägerplatte, die gemäß einer Ausführungsform auf dem Boden des Klärbeckens oder an bodenseitigen Befestigungsstrukturen des Klärbeckens fixierbar ist. Die Trägerstruktur weist vorzugsweise vertikal orientierte Seitenwände und eine vorzugsweise horizontale insbesondere parallel zu einem Boden des Klärbeckens ausgebildete und dem Boden des Klärbeckens zugewandte Unterseite auf. Mittels der an die Trägerstruktur angeschlossenen Membran ist die Erzeugung feiner Gasblasen zur Belüftung der zu klärenden Flüssigkeit bzw. des zu klärenden fluiden Mediums möglich.

Die Profilierung ist im Rahmen der Erfindung auf der der Unterseite gegenüberliegenden Oberseite der Trägerstruktur angeordnet. Durch die Profilierung wird eine Oberflächenvergrößerung der Oberseite der Trägerstruktur erreicht. Empfohlenermaßen ist die Unterseite der Trägerstruktur plan bzw. eben ausgebildet. Gemäß einer Ausführungsform ist zumindest eine Seitenwand bzw. sind die Seitenwände der Trägerstruktur plan bzw. eben ausgebildet.

Zweckmäßigerweise stellt das Befestigungsmittel sicher, dass die Membran im Betriebszustand die gleiche bzw. ungefähr die gleiche Kontur wie die an der Oberfläche der Trägerstruktur angeordnete Profilierung aufweist. Es ist möglich, dass der Anlageabschnitt bzw. die Anlageabschnitte der Membran im Betriebszustand durch die Befestigungsmittel in der Vertiefung bzw. in den Vertiefungen gegen die Profilierung gedrückt wird. Vorteilhafterweise wird die Membran im Betriebszustand des Klärbeckenbelüfters mit dem Befestigungsmittel mit der Maßgabe in der Vertiefung gehalten, dass ein Abstand zwischen dem Anlageabschnitt und der Vertiefung bzw. Profilierung kleiner ist als ein Abstand zwischen einer Erhebung der Profilierung und der Vertiefung der Profilierung. Eine maximale Höhe der Erhebung (Scheitelpunkt) wird im Rahmen der Erfindung durch einen Punkt bzw. Bereich der Erhebung angegeben, welcher Bereich den größtmöglichen Abstand (maximale Höhe) von der Unterseite der Trägerstruktur aufweist, welcher Abstand quer zur Unterseite der Trägerstruktur gemessen wird. Ein Minimum bzw. Tiefpunkt der Vertiefung ist ein Punkt bzw. Abschnitt der Vertiefung, welcher Punkt bzw. Abschnitt einen kleinstmöglichen Abstand (minimale Höhe) zur Unterseite der Trägerstruktur aufweist. Der minimale Abstand wird vorzugsweise quer zur Unterseite der Trägerstruktur gemessen. Der Abstand zwischen der Erhebung und der Vertiefung meint insbesondere eine Differenz zwischen der maximalen Höhe und der minimalen Höhe. Vorzugsweise beträgt der Abstand 2 cm bis 50 cm und bevorzugt 5 cm bis 30 cm. Bevorzugt ist im Betriebszustand die Membran derart in der Vertiefung und an den Trägerpunkten und/oder einer Stützstruktur gehalten, dass der Abstand zwischen dem Anlageabschnitt und der Profilierung kleiner als ein Abstand zwischen der Profilierung und der übrigen Membran insbesondere kleiner als der Abstand zwischen der übrigen Membran und einer Erhebung, insbesondere einem Scheitelpunkt ist.

Gemäß einer bevorzugten Ausführungsform ist das Fixierungselement als Fixierungsband ausgebildet, welches Fixierungsband die Trägerstruktur besonders bevorzugt vollständig bzw. im Wesentlichen vollständig umläuft. Zweckmäßigerweise ist die Membran zwischen dem Fixierungsmittel und der Seitenwand bzw. den Seitenwänden der Trägerstruktur fixiert, vorzugsweise geklemmt. Auf diese Weise wird die fluiddichte Anlage der Membran an die Trägerstruktur sichergestellt. Gemäß einer Ausführungsform ist in die Seitenwand eine Nut bzw. sind in die Seitenwände Nuten eingelassen, in welcher Nut bzw. in welchen Nuten das Fixierungsmittel, insbesondere das Fixierungsband aufgenommen ist. Im Betriebszustand tritt die eingepresste Luft bzw. der eingepresste Sauerstoff besonders bevorzugt ausschließlich durch die Luftaustrittsöffnungen der Membran aus dem Klärbeckenbelüfter aus.

Empfohlenermaßen weist die Trägerstruktur eine Luftzuführung auf, mit welcher Luftzuführung im Betriebszustand Luft zwischen die Profilierung bzw. die membranseitige Oberfläche der Trägerstruktur und die Membran pressbar ist, so dass sich die Membran im Betriebszustand abgesehen von den mit dem Befestigungsmittel beaufschlagten Anlageabschnitt der Membran von der Profilierung abhebt. Dass sich die Membran von der Profilierung abhebt, meint insbesondere, dass ein vertikaler Abstand zwischen der Membran und der Unterseite der Trägerstruktur größer ist als ein vertikaler Abstand zwischen der Erhebung bzw. dem Scheitelpunkt und der Unterseite der Trägerstruktur. Zweckmäßigerweise ist die Luftzuführung durch die Unterseite in die Trägerstruktur eingeführt. Gemäß einer Ausführungsform erfolgt die Luftzuführung durch eine Seitenwand der Trägerstruktur. Es liegt im Rahmen der Erfindung, dass zumindest zwei und gegebenenfalls eine Mehrzahl bzw. Vielzahl Klärbeckenbelüfter an eine Luftzuführung angeschlossen sind/ist.

Vorteilhafterweise ist die Trägerstruktur einteilig bzw. einstückig mit der Profilierung ausgebildet. Die Profilierung bildet gemäß dieser Ausführungsform die Oberfläche (Oberseite) der Trägerstruktur.

Vorteilhafterweise ist auf der Trägerstruktur eine Stützstruktur angeordnet, wobei die Trägerstruktur und die Stützstruktur als separate Bauteile ausgebildet sind und wobei die Profilierung auf der Stützstruktur angeordnet ist. Besonders bevorzugt ist die Profilierung eine membranseitige Oberfläche der Stützstruktur. Gemäß einer Ausführungsform sind die Trägerstruktur und die Stützstruktur aus identischen bzw. im Wesentlichen identischen Materialien gefertigt. Es liegt im Rahmen der Erfindung, dass die Trägerstruktur und die Stützstruktur aus verschiedenen Materialien bestehen. Zweckmäßigerweise ist die Stützstruktur mit der Trägerstruktur insbesondere kraftschlüssig und formschlüssig verbunden. Gemäß einer Ausführungsform liegt die Stützstruktur lediglich bzw. frei von Verbindungsmitteln auf der Trägerstruktur auf. Empfohlenermaßen weist die Stützstruktur eine Vielzahl von Strömungsöffnungen auf, durch welche Strömungsöffnungen Luft und/oder Sauerstoff von der Luftzuführung strömt, um die Membran von der Profilierung bzw. Stützstruktur abzuheben und besonders bevorzugt im Betriebszustand die Luftaustrittsöffnungen aufzudrücken. Vorzugsweise weist die Trägerstruktur einen die membranseitige Oberfläche (Oberseite) der Trägerstruktur umgebenden Rahmen auf, welcher Rahmen eine Aufnahme für die Stützstruktur auf der Trägerstruktur definiert. Vorteilhafterweise ist die in der Aufnahme aufgenommene Stützstruktur durch den Rahmen gegen ein Verrutschen bzw. Verlagern auf der Oberseite der Trägerstruktur gesichert. Es liegt im Rahmen der Erfindung, dass die Stützstruktur verbindungsmittelfrei und unverschiebbar auf der Trägerstruktur gelagert ist. Vorzugsweise wird die Stützstruktur lediglich durch die Membran im Ruhezustand gegen die Trägerstruktur gedrückt.

Empfohlenermaßen ist die Profilierung als Wellenprofil mit einer Vielzahl von Wellenkämmen als Erhebungen und Wellentälern als Vertiefungen ausgebildet, wobei in vorzugsweise jedem Wellental ein Befestigungsmittel angeordnet ist. Zweckmäßigerweise weisen die Wellenkämme jeweils eine gleiche bzw. ungefähr gleiche, vorzugsweise ausgehend von der Unterseite der Trägerstruktur messbare Höhe auf. Empfohlenermaßen ist ein Abstand zwischen den Wellentälern und der Unterseite der Trägerstruktur jeweils gleich bzw. im Wesentlichen gleich wobei der Abstand vorzugsweise quer zur Unterseite gemessen wird. Gemäß einer Ausführungsform ist lediglich in einem Teil der Wellentäler ein Befestigungsmittel angeordnet. Besonders bevorzugt ist in jedem Wellental ein Befestigungsmittel angeordnet.

Vorzugsweise sind die Erhebungen der Profilierung als eine Vielzahl bzw. Mehrzahl von Zylinderstümpfen und/oder Kegelstümpfen und/oder Kugeln und/oder Kugelkalotten ausgebildet, wobei bevorzugt eine Mehrzahl von Befestigungsmitteln in zwischen den Zylinderstümpfen und/oder Kegelstümpfen und/oder Kugeln und/oder Kugelkalotten ausgebildeten Vertiefungen angeordnet sind. Empfohlenermaßen sind Kanten der Zylinderstümpfe und/oder Kegelstümpfe jeweils abgerundet ausgebildet. Vorteilhafterweise liegen ebene Abschnitte der Kugelkalotten jeweils auf der Trägerstruktur auf. Es hat sich als vorteilhaft herausgestellt, die Zylinderstümpfe und/oder Kegelstümpfe und/oder Kugeln und/oder Kugelkalotten in vorzugsweise parallel zueinander ausgerichteten Reihen anzuordnen, wobei in einer Reihe angeordnete Zylinderstümpfe und/oder Kegelstümpfe und/oder Kugeln und/oder Kugelkalotten miteinander fluchtend ausgerichtet sind. Zweckmäßigerweise sind zwischen zwei benachbarten Reihen von Zylinderstümpfen oder Kegelstümpfen oder Kugeln oder Kugelkalotten vorteilhafterweise geradlinige Vertiefungen ausgebildet. Gemäß einer besonders bevorzugten Ausführungsform werden durch die die Profilierung bildenden Zylinderstümpfe und/oder Kegelstümpfe und/oder Kugeln und/oder Kugelkalottten erste Vertiefungen und zweite Vertiefungen gebildet, wobei die ersten Vertiefungen senkrecht zu den zweiten Vertiefungen orientiert sind.

Die ersten Vertiefungen und zweiten Vertiefungen bilden beispielsweise ein rechtwinkliges Gitter aus, wobei die Zylinderstümpfe und/oder Kegelstümpfe und/oder Kugeln und/oder Kugelkalotten in Zwischenräumen bzw. zwischen den Vertiefungen platziert sind.

Gemäß einer bevorzugten Ausführungsform ist ein Befestigungsmittel als Befestigungsband ausgebildet bzw. sind die Befestigungsmittel jeweils als Befestigungsband ausgebildet, wobei ein Befestigungsband ein von der Membran, der Trägerstruktur und gegebenenfalls der Stützstruktur gebildetes Aggregat umschließt. Vorteilhafterweise ist das Befestigungsmittel als Schlaufe bzw. als Schlinge ausgebildet. Das Befestigungsmittel liegt vorzugsweise unmittelbar an der Unterseite der Trägerstruktur an der Trägerstruktur an. An die Oberseite mit der Unterseite verbindenden Seitenwänden der Trägerstruktur liegt das Befestigungsmittel zumindest teilweise und zweckmäßigerweise lediglich teilweise an. Gemäß einer Ausführungsform ist das Befestigungsmittel als Niederhalterstab (Stab) bzw. Niederhalterohr (Rohr) ausgebildet, welcher Stab bzw. welches Rohr vorzugsweise auf einer der Trägerstruktur abgewandten Oberfläche des Anlageabschnitts der Membran aufliegt. Der Stab bzw. das Rohr kann mit der Trägerkonstruktion und/oder Stützstruktur verbunden sein. Es empfiehlt sich, dass im Ruhezustand die Membran von dem Befestigungsmittel derart beaufschlagt wird, dass die Membran durch das Befestigungsmittel zur Anlage an die Profilierung bzw. die Vertiefung gebracht wird. Es ist möglich, dass die Membran im Betriebszustand durch das Befestigungsmittel an die Profilierung bzw. die Stützstruktur gedrückt wird. Vorzugsweise wird die Membran im Betriebszustand von der Profilierung bzw. der Stützstruktur derart abgehoben, dass ein Abstand zwischen dem Anlageabschnitt der Membran bzw. dem Befestigungsmittel und einer Vertiefung der Profilierung kleiner ist als ein Abstand zwischen einer Vertiefung und einer Erhebung. Besonders bevorzugt ist die Membran im Betriebszustand derart gehalten, dass ein Abstand zwischen der Profilierung und des Anlageabschnitts bzw. der Anlageabschnitte der Membran kleiner ist als ein Abstand zwischen der Profilierung und der übrigen Membran. Übrige Membran meint im Rahmen der Erfindung insbesondere Abschnitte der Membran auf der Oberseite der Trägerstruktur und/oder Stützstruktur, die nicht von dem Befestigungsmittel und/oder Fixierungsmittel gehalten bzw. gegen die Trägerstruktur bzw. Stützstruktur gepresst werden.

Gemäß einer Ausführungsform ist die Trägerstruktur und/oder die Stützstruktur vorzugsweise jeweils rechteckig ausgebildet. Es ist möglich, dass die Trägerstruktur einen Flächeninhalt bzw. eine Querschnittsfläche von zumindest 4,5 m², bevorzugt von zumindest 6 m², und besonders bevorzugt von zumindest 10 m² aufweist. Es liegt im Rahmen der Erfindung, dass die Trägerstruktur und/oder die Stützstruktur insbesondere jeweils rund ausgebildet sind. Vorzugsweise ist die Vertiefung bzw. sind alle Vertiefungen als geradlinige Vertiefung bzw. Vertiefungen ausgebildet. Empfohlenermaßen erstreckt sich die Vertiefung parallel bzw. ungefähr parallel zu einer Seitenwand bzw. einer Kante der Trägerstruktur an welcher Kante die Seitenwand an die oberste der Trägerstrukturen stößt . Es liegt im Rahmen der Erfindung, dass eine Mehrzahl von Vertiefungen in der Profilierung und/oder der Stützstruktur angeordnet sind, welche Vertiefungen beispielsweise kreuzförmig bzw. gitterförmig ausgebildet sind. Gemäß einer Ausführungsform weist die Vertiefung erste Vertiefungen auf, welche erste Vertiefungen parallel zueinander angeordnet ist. Beispielsweise weist die Vertiefung zweite Vertiefungen auf, welche zweiten Vertiefungen parallel zueinander orientiert sind. Besonders bevorzugt sind die ersten Vertiefungen senkrecht bzw. ungefähr senkrecht zu den zweiten Vertiefungen ausgerichtet. Es liegt im Rahmen der Erfindung, dass Befestigungsmittel in zumindest einem Teil der ersten Vertiefungen und/oder in zumindest einem Teil der zweiten Vertiefungen angeordnet sind. Besonders bevorzugt ist durch jede erste Vertiefung und durch jede zweite Vertiefung jeweils ein Befestigungsmittel geführt.

Zweckmäßigerweise besteht die Membran im Wesentlichen aus einem Ethylen-Propylen-Diene-Kautschuk (EPDM) und/oder aus einem Polyurethan (PU). Vorteilhafterweise sind die Luftaustrittsöffnungen in der Membran als eine Vielzahl von Schlitzen und/oder Rundlöchern ausgebildet. Eine trägerstrukturseitige Druckbeaufschlagung der Membran bewirkt, dass die Luftaustrittsöffnungen geöffnet werden. Ist die Membran trägerstrukturseitig im Ruhezustand drucklos, wird die Membran durch die die Membran umgebende Flüssigkeit gegen die Profilierung gedrückt. Im Ruhezustand ist die Membran in einem zusammengezogenen Zustand, in welchem zusammengezogenen Zustand die Luftaustrittsöffnungen geschlossen sind.

Der Erfindung liegt die Erkenntnis zugrunde, dass sich ein erfindungsgemäßer Klärbeckenbelüfter durch eine flexible und variabel gestaltbare Größeneinstellung der Trägerstruktur auszeichnet. Durch die Profilierung weist der erfindungsgemäße Klärbeckenbelüfter eine vergrößerte Oberfläche ab, so dass mit dem erfindungsgemäßen Klärbeckenbelüfter ein optimierter Luft- bzw. Sauerstoffeintrag in die den Klärbeckenbelüfter umgebende Flüssigkeit sichergestellt ist. Der erfindungsgemäße Klärbeckenbelüfter kann darüber hinaus in besonders vorteilhafter Weise in sehr tiefen und flächenmäßig sehr kleinen Klärbecken eingesetzt werden. Der erfindungsgemäße Klärbeckenbelüfter ist beispielsweise in Klärbecken mit einer Beckentiefe von mehr als 5 m einsetzbar. Dadurch, dass der erfindungsgemäße Klärbeckenbelüfter hinsichtlich seiner Größeneinstellung flexibel handhabbar ist, kann eine komplizierte Verschaltung einer Vielzahl von Klärbeckenbelüftern zur Versorgung eines Klärbeckens mit Luft und/oder Sauerstoff vermieden werden. Folglich können mit dem erfindungsgemäßen Klärbeckenbelüfter die Investitionskosten in die Ausstattung eines Klärbeckens mit Klärbeckenbelüftern verringert werden.

Nachfolgend wird die Erfindung anhand einer lediglich ein Ausführungsbeispiel darstellenden Zeichnung erläutert. Es zeigen:
- **Fig. 1**: eine vereinfachte, perspektivische Ansicht eines erfindungsgemäßen Klärbeckenbelüfters,
- **Fig. 2a**: einen Schnitt durch den Klärbeckenbelüfter gemäß Fig. 1 im Ruhezustand,
- **Fig. 2b**: einen Schnitt durch den Klärbeckenbelüfter gemäß Fig. 1 im Betriebszustand und
- **Fig. 3**: eine vereinfachte Darstellung einer zweiten Ausführungsform eines erfindungsgemäßen Klärbeckenbelüfters.

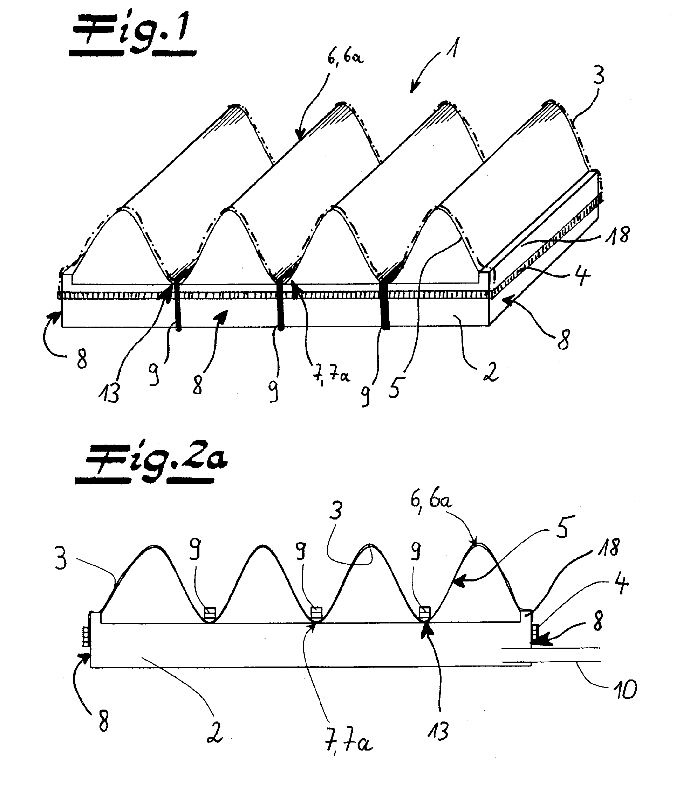

In Fig. 1 ist ein Klärbeckenbelüfter 1 dargestellt, der eine Trägerstruktur 2 aufweist. Strichpunktiert ist eine Membran 3 dargestellt, die mit einem als Fixierungsband 4 ausgebildeten Fixierungsmittel an die Trägerstruktur 2 angeschlossen ist. Gemäß Fig. 1 ist auf der Trägerstruktur 2 eine Stützstruktur 5 angeordnet, welche Stützstruktur 5 eine Profilierung mit Erhebungen 6 bzw. Wellenkämmen 6a und Vertiefungen 7 bzw. Wellentälern 7a aufweist. Die Stützstruktur 5 bzw. die Profilierung ist gleichsam als Wellenprofil ausgebildet.

In Fig. 1 ist weiterhin dargestellt, dass die Membran 3 an Seitenwänden 8 der Trägerstruktur 2 anliegt und mit dem Fixierungsband 4 fluiddicht gegen die Seitenwände 8 der Trägerstruktur 2 gedrückt wird. In den Wellentälern 7a sind gemäß Fig. 1 als Befestigungsbänder 9 ausgebildete Befestigungsmittel angeordnet, welche Befestigungsbänder 9 in den Wellentälern 7a jeweils ein von der Membran 3, der Stützstruktur 5 und der Trägerstruktur 2 gebildetes Aggregat umlaufen. Um ein Verrutschen der Stützstruktur 5 auf der Trägerstruktur 2 zu verhindern, ist auf einer Oberseite der Trägerstruktur 2 gemäß den Figuren 1, 2a, 2b, 3 ein Rahmen 18 angeordnet, der gemäß dem Ausführungsbeispiel die Stützstruktur 5 umläuft.

In Fig. 2a ist der Ruhezustand der Klärbeckenbelüfters 1 dargestellt. In dem Ruhezustand liegt die Membran 3 auf der Stützstruktur 5 auf. Gemäß Fig. 2a sind Luftaustrittsöffnungen der Membran 3 verschlossen, so dass bedingt durch die Anlage der Membran 3 an der Stützstruktur 5 und den verschlossenen Luftaustrittsöffnungen ein Eintreten des den Klärbeckenbelüfter 1 umgebenden fluiden Mediums in den Klärbeckenbelüfter ausgeschlossen ist.

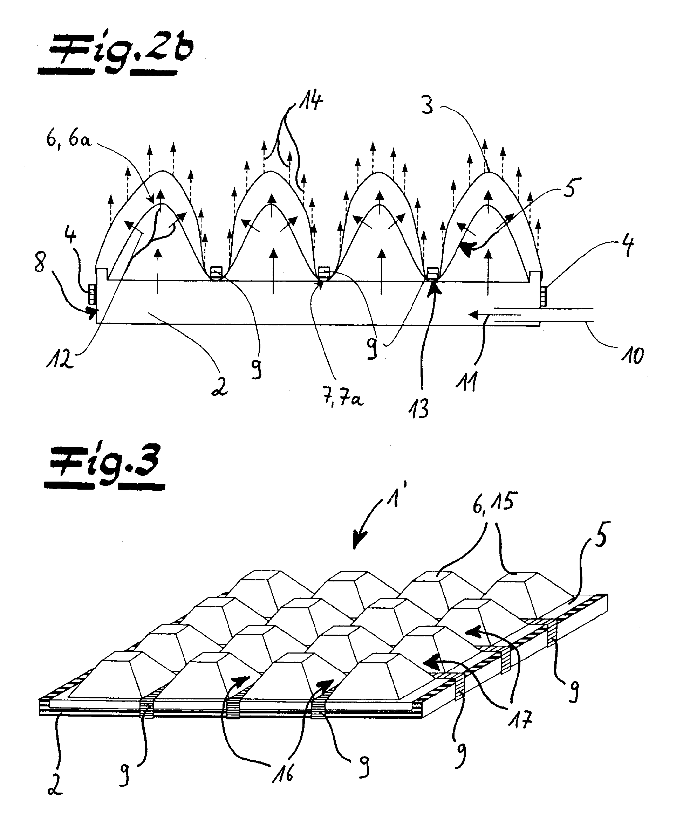

In Fig. 2b ist der Betriebszustand des Klärbeckenbelüfters 1 dargestellt. Durch die Luftzuführung 10 wird Luft in die Trägerstruktur 2 gepresst, was durch den Pfeil 11 dargestellt ist. In der Trägerstruktur 2 und in der Stützstruktur 5 wird der durch den Pfeil 11 dargestellte Luftstrom in dem Klärbeckenbelüfter 1 derart verteilt, dass die Membran 3 gleichmäßig mit einem Luftdruck beaufschlagt wird, was durch die Pfeile 12 symbolisiert ist. Im Betriebszustand ist die Membran von der Stützstruktur 5 abgehoben, wobei in den Wellentälern 7a Anlageabschnitte 13 der Membran 3 durch die Befestigungsbänder 9 in den Vertiefungen 7a gehalten werden. Gemäß Fig. 2b entspricht eine Kontur der Membran 3 im Betriebszustand einer Kontur der Profilierung bzw. der Stützstruktur 5. Die Druckbeaufschlagung der Membran 3 im Betriebszustand bewirkt, dass durch die Ausdehnung der Membran 3 die Luftaustrittsöffnungen geöffnet und Luft durch die Membran in das den Klärbeckenbelüfter 1 umgebende fluide Medium strömt. Dies ist durch die Pfeile 14 dargestellt. Sobald der durch die Luftzuführung 10 strömende Luftstrom 11 abgestellt wird, kollabiert die Membran 3 derart, dass die Membran 3 zur Anlage an die Profilierung bzw. die Stützstruktur 5 gebracht wird und in den Ruhezustand gemäß Fig. 2a zurückkehrt.

In Fig. 3 ist ein Klärbeckenbelüfter 1' dargestellt, der im Wesentlichen dem in Fig. 1, 2a und 2b dargestellten Klärbeckenbelüfter 1 entspricht. Bei dem in Fig. 3 dargestellten Klärbeckenbelüfter 1' weist die Stützstruktur 5 Erhebungen 6 in Form einer Mehrzahl von Kegelstümpfen 15 aus. Gemäß Fig. 3 werden zwischen den Kegelstümpfen 15 erste Vertiefungen 16 und zweite Vertiefungen 17 ausgebildet. Die ersten Vertiefungen 16 sind gemäß Fig. 3 parallel zueinander orientiert. Die zweiten Vertiefungen 17 sind parallel zueinander ausgerichtet. Weiterhin ist in Fig. 3 erkennbar, dass die ersten Vertiefungen jeweils senkrecht zu den zweiten Vertiefungen ausgerichtet sind. Gemäß Fig. 3 sind sowohl in den ersten Vertiefungen 16 als auch in den zweiten Vertiefungen 17 jeweils Befestigungsbänder 9 angeordnet. In Fig. 3 sind der besseren Übersicht halber die Membran 3 und das Fixierungsband 4 nicht dargestellt.

## Patentansprüche

1. Klärbeckenbelüfter mit einer Trägerstruktur (2) und mit einer eine Vielzahl von Luftaustrittsöffnungen aufweisenden Membran (3), wobei die Membran (3) mit einem Fixierungsmittel (4) fluiddicht an die Trägerstruktur (2) angeschlossen ist, wobei die Trägerstruktur (2) auf ihrer membranseitigen Oberfläche eine Profilierung aufweist, welche Profilierung zumindest eine zwischen zwei Erhebungen (6) angeordnete Vertiefungen (7, 16, 17) aufweist, wobei die Membran (3) mit zumindest einem Befestigungsmittel (9), welches Befestigungsmittel (9) in der Vertiefung (7, 16, 17) angeordnet ist, an der Trägerstruktur (2) bzw. in der Vertiefung (7, 16, 17) gesichert ist, wobei die Membran (3) im Ruhezustand des Klärbeckenbelüfters (1) auf der Profilierung aufliegt, wobei ein Anlageabschnitt (13) der Membran (3) in einem Betriebszustand des Klärbeckenbelüfters (1) mit dem Befestigungsmittel (9) in der Vertiefung (7, 16, 17) gehalten ist und wobei die Membran (3) abgesehen von dem Anlageabschnitt (13) im Betriebszustand von der Profilierung abgehoben ist.

2. Klärbeckenbelüfter nach Anspruch 1, wobei das Fixierungsmittel als Fixierungsband (4) ausgebildet ist, welches Fixierungsband (4) die Trägerstruktur (2) vollständig bzw. im Wesentlichen vollständig umläuft.

3. Klärbeckenbelüfter nach einem der Ansprüche 1 oder 2, wobei die Trägerstruktur (2) eine Luftzuführung (10) aufweist, mit welcher Luftzuführung (10) im Betriebszustand Luft zwischen die Profilierung bzw. die membranseitige Oberfläche der Trägerstruktur (2) und die Membran (3) pressbar ist, so dass sich die Membran (3) im Betriebszustand abgesehen von dem mit dem Befestigungsmittel (9) beaufschlagten Anlageabschnitt (13) der Membran (3) von der Profilierung abhebt.

4. Klärbeckenbelüfter nach einem der Ansprüche 1 bis 3, wobei die Trägerstruktur (2) einteilig bzw. einstückig mit der Profilierung ausgebildet ist.

5. Klärbeckenbelüfter nach einem der Ansprüche 1 bis 3, wobei auf der Trägerstruktur (2) eine Stützstruktur (5) angeordnet ist, wobei die Trägerstruktur (2) und die Stützstruktur (5) als separate Bauteile ausgebildet sind und wobei die Profilierung auf der Stützstruktur (5) angeordnet ist.

6. Klärbeckenbelüfter nach Anspruch 5, wobei die Trägerstruktur (2) einen die membranseitige Oberfläche (Oberseite) der Trägerstruktur (2) umgebenden Rahmen (18) aufweist, welcher Rahmen (18) eine Aufnahme für die Stützstruktur (5) auf der Trägerstruktur (2) definiert.

7. Klärbeckenbelüfter nach einem der Ansprüche 1 bis 6, wobei die Profilierung als Wellenprofil mit einer Vielzahl von Wellenkämmen (6a) als Erhebungen (6) und Wellentälern (7a) als Vertiefungen (7) ausgebildet ist, wobei in vorzugsweise jedem Wellental (7a) jeweils ein Befestigungsmittel (9) angeordnet ist.

8. Klärbeckenbelüfter nach einem der Ansprüche 1 bis 6, wobei Erhebungen (6) der Profilierung als eine Vielzahl bzw. Mehrzahl von Zylinderstümpfen (15) und/oder Kegelstümpfen ausgebildet sind und wobei bevorzugt eine Mehrzahl von Befestigungsmitteln (9) in zwischen den Zylinderstümpfen (15) und/oder Kegelstümpfen ausgebildeten Vertiefungen (16, 17) angeordnet sind.

9. Klärbeckenbelüfter nach einem der Ansprüche 1 bis 8, wobei ein Befestigungsmittel als Befestigungsband (9) ausgebildet ist bzw. die Befestigungsmittel jeweils als Befestigungsbänder (9) ausgebildet sind, wobei ein Befestigungsband (9) ein von der Membran (3), der Trägerstruktur (2) und gegebenenfalls der Stützstruktur (5) gebildetes Aggregat umschließt.

10. Klärbeckenbelüfter nach einem der Ansprüche 1 bis 9, wobei die Trägerstruktur (2) und/oder die Stützstruktur (5) vorzugsweise jeweils rechteckig ausgebildet sind.

11. Klärbeckenbelüfter nach einem der Ansprüche 1 bis 10, wobei die Vertiefung (7) bzw. aale Vertiefungen (7) als geradlinige Vertiefung (7) bzw. Vertiefungen (7) ausgebildet ist bzw. sind.

12. Klärbeckenbelüfter nach einem der Ansprüche 1 bis 10, wobei sich die Vertiefungen (7) parallel bzw. ungefähr parallel zu einer Seitenwand (8) bzw. einer Kante erstrecken, an welche Kante die Seitenwand (8) an die Oberseite der Trägerstruktur (2) stößt.

13. Klärbeckenbelüfter nach einem der Ansprüche 1 bis 12, wobei die Membran (3) im Wesentlichen aus einem Ethylen-Proyplen-Diene-Kautschuk (EPDM) und/oder Polyurethan (PU) besteht.

14. Klärbeckenbelüfter nach einem der Ansprüche 1 bis 13, wobei die Luftaustrittsöffnungen in der Membran (3) als eine Vielzahl von Schlitzen ausgebildet sind.
